# EUROPÄISCHE PATENTSCHRIFT

(11) **EP 0 600 232 B1**
(45) Veröffentlichungstag und Bekanntmachung des Hinweises auf die Patenterteilung: **22.04.1998**
(21) Anmeldenummer: 93117559.0
(22) Anmeldetag: 29.10.1993
(51) Int. Cl.: B31F 1/30

(54) **Verfahren und Vorrichtung zum Herstellen von Wellbandverpackungsteilen**
Method and apparatus for making cardboard packaging
Procédé et machine pour la fabrication d'emballage en carton

(30) Priorität: 02.11.1992 DE 4236981; 16.04.1993 CH 1165/93
(43) Veröffentlichungstag der Anmeldung: 08.06.1994
(73) Patentinhaber: ALPHA INDUSTRIE DESIGN GmbH CAE/CAD/CAM Beratungsgesellschaft Projektierung und Realisierung, D-65205 Wiesbaden (DE)
(72) Erfinder: Erhard-Hollmann, Joachim, D-65193 Wiesbaden (DE)
(74) Vertreter: Luderschmidt, Schüler & Partner GbR

(56) Entgegenhaltungen:
- EP-A- 0 008 225
- BE-A- 652 497
- CH-A- 363 227
- CH-A- 367 383
- CH-A- 370 951
- DE-A- 1 015 673
- GB-A- 2 036 823
- US-A- 2 556 011
- US-A- 3 784 430

## Beschreibung

Die Erfindung betrifft ein Verfahren und eine Vorrichtung zum Herstellen von Wellbandverpackungsteilen.

Um eine Verwechslung mit dem Begriff "Wellpappe" in seiner allgemein verstandenen Bedeutung als umhüllendes Verpackungsmaterial zu vermeiden, sind die hier betroffenen Verpackungsteile für den Zweck dieser Beschreibung als "Wellbandverpackungsteile" bezeichnet. Solche Teile sind auch unter dem Namen Rondoteile bekannt.

Um die begrifflichen Erläuterungen einfacher zu gestalten, wird ausnahmsweise bereits an dieser Stelle auf die Fig. 1 und 2 der beiliegenden Zeichnung verwiesen, welche ein Wellbandverpackungsteil darstellen, welches nach dem erfindungsgemäßen Verfahren hergestellt wurde, und auf die Fig. 3, die in perspektivischer Darstellung eine mögliche Gesamtverpackung zeigt, die ein solches Wellbandverpackungsteil verwendet.

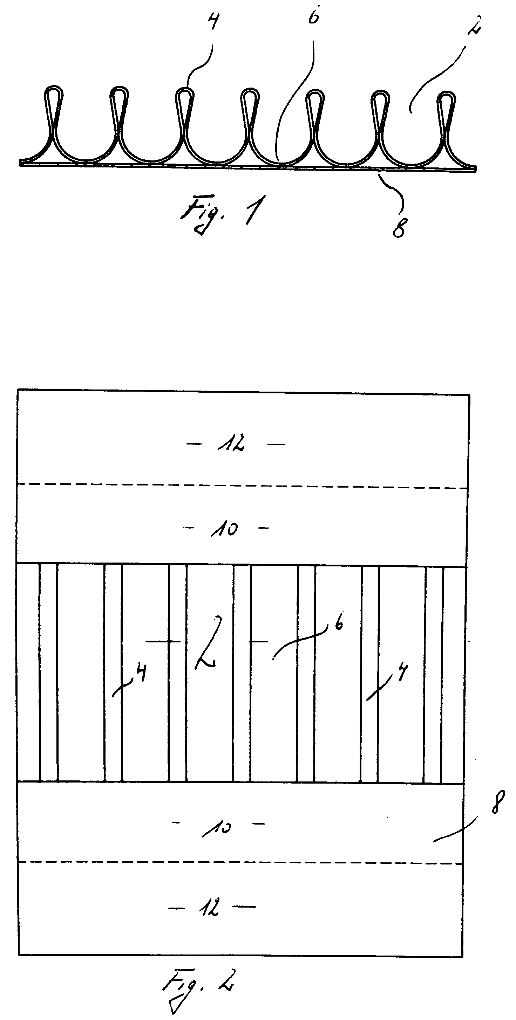

Zu erkennen ist in der geschnittenen Seitenansicht der Fig. 1 eine im allgemeinen aus einem Abschnitt einer endlosen Materialbahn hergestellte Welle oder hergestelltes Wellband 2 mit relativ engen oberen Schlaufen 4 und breiter ausgebildeten unteren Schlaufen 6, die auf einer Trägerbahn 8 aufgeleimt sind, um insgesamt das hier betroffene Wellbandverpackungsteil zu bilden.

Ein solches Wellbandverpackungsteil dient beispielsweise der Aufnahme zylindrischer oder langgestreckter Teile wie Tablettenröhrchen, Ampullen, Buntstiften oder dergl., die entweder bruchgefährdet sind und durch die hochstehenden Teile der Welle berührungsfrei in sicherem Abstand gehalten werden oder die sich aus anderen Gründen nicht berühren sollen, weil sie sich sonst beispielsweise gegenseitig verkratzen würden. Die in Fig. 1 dargestellte Idealform der Welle, bei der die oberen Schlaufen 4 unterhalb ihrer Scheitellinien wieder verengt sind, wodurch der Aufnahmeraum der unteren Schlaufen 6 eine gewisse Hinterschneidung erfährt, ist nicht nur dazu geeignet, verpackte Gegenstände voneinander getrennt zu halten, sondern hält die Gegenstände auch gewissermaßen fest, so daß sie nicht ohne weiteres aus dem Verpackungsteil herausfallen können, weil sie nur durch Überwindung des elastischen Widerstandes der Welle, d.h., durch gewisses Auseinanderbiegen der oberen Wellenschlaufen wieder entnommen werden können.

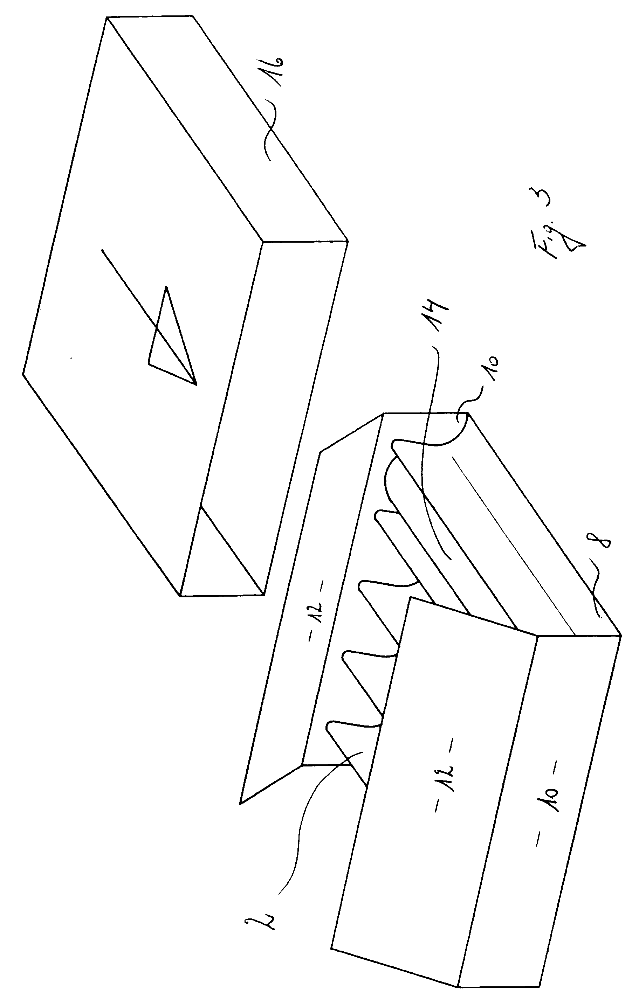

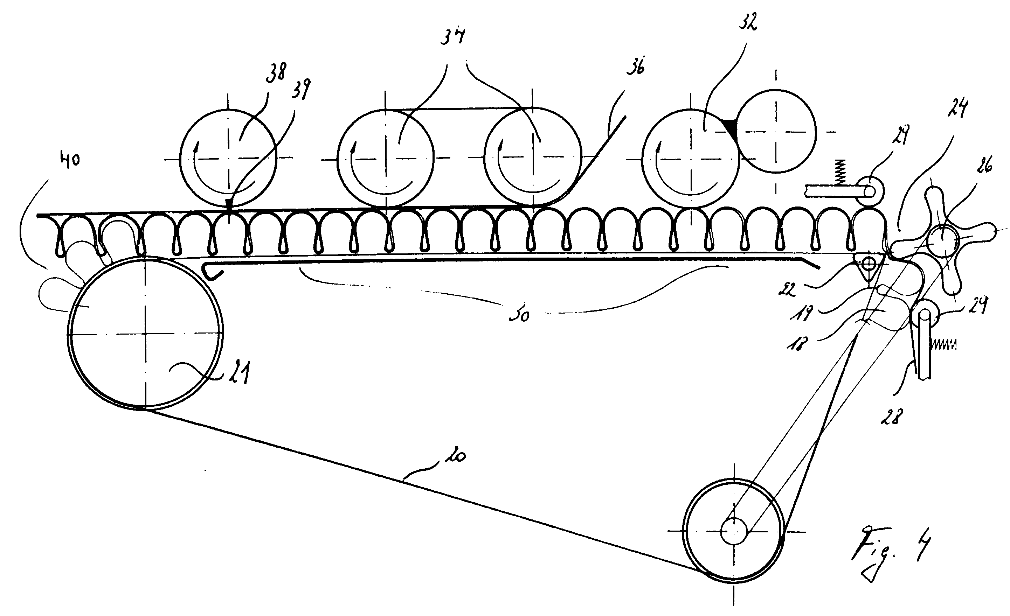

Wie aus Fig. 2 zu erkennen ist, kann die Trägerbahn 8 in spezieller Ausführungsform auch seitlich über das Wellband vorstehen, wobei dieser Überstand zu Umschlaglaschen 10 und 12 ausgebildet werden kann, die seitlich nach oben und über die verpackten Gegenstände 14 gefaltet werden könnn, wie dies aus Fig. 3 hervorgeht. Die so ausgebildete Einheit kann dann noch zusätzlich in eine Verpackungshülle 16 eingeschoben werden, wie dies ebenfalls in Fig. 3 angedeutet ist.

Solche Wellbandverpackungsteile aus Karton, Pappe oder dergl. sind seit längerem bekannt. Die Technologie der tiefgezogenen Kunststoffverpackungen hat Wellteile aus Karton oder Pappe in der letzten Zeit jedoch weitgehend vom Markt verdrängt. Dies ist nicht nur in den sehr rationellen Herstellungsmethoden für Kunststofftiefziehteile begründet, sondern auch darin, daß sich die Kunststofftiefziehteile problemlos der Gestalt jedes zu verpackenden Gegenstandes speziell anpassen lassen. Insbesondere die die Gegenstände in den Vertiefungen zurückhaltenden Hinterschneidungen sind beim Tiefziehen von Kunststoff einfacher zu erreichen als beim Wellen von Karton.

Auch für die in tiefgezogene Kunststoffteile eingelegten Gegenstände werden im allgemeinen Umverpackungen und sonstige Verpackungsteile aus Karton oder Wellpappe, insbesondere Mikrowelle (hier im eigentlichen Sinn des Wortes) verwendet. Dadurch ergibt sich Verpackungsabfall aus zwei unterschiedlichen Materialien, der im Zuge des neuen Umweltbewußtseins Sortier- und Aufarbeitungsprobleme mit sich bringt. Es besteht daher eine Tendenz zum Comeback von Wellbandverpackungsteilen aus Karton oder Pappe, so daß die Verpackungen insgesamt aus Faserstoffmaterial bestehen, welches der Papierherstellung wieder zugeführt werden kann.

Probleme bei der Verarbeitung von Karton und Pappe zu solchen Wellbandverpackungsteilen bestehen jedoch, wie bereits vorstehend erwähnt, in einer exakten und ansprechenden Formgebung.

Eine Maschine vom herkömmlichen Typ zur Herstellung von Wellbandverpackungsteilen ist beispielsweise der DE-B-1 015 673 zu entnehmen, die jedoch etwas irreführenderweise die Bezeichnung "Maschine zur Herstellung von Wellpappe" trägt. Wie sich den Zeichnungen dieser Druckschrift unschwer entnehmen läßt, besteht das der beschriebenen Vorrichtung zugrundeliegende Verfahrensprinzip darin, daß eine Folge zylindrischer Stangen in gegenseitigem Abstand, beispielsweise am Umfang von zwei beabstandeten Zahnrädern gehalten wird, und daß die zur Welle zu verformende Materialbahn mittels einer ein Formwerkzeug darstellenden Zahnwalze in die Abstände zwischen den Stangen gedrückt wird, wobei die Materialbahn gleichzeitig an die der Zahnwalze zugewandten Umfangsabschnitte zur Ausbildung der unteren Schlaufen der Welle angelegt wird. Wie jedoch aus Fig. 1 leicht zu erkennen ist, ist eine große Breite der oberen Schlaufen der Welle nicht erwünscht, da einerseits hierfür unnötiger Platz verschwendet wird und andererseits die Hinterschneidungswirkung nicht erzielt wird. Die ideale Form der Welle besteht daher darin, daß sich die Schenkel der oberen Schlaufen in halber Höhe in etwa berühren, die oberen Schlaufen sich oberhalb dieser Berührungsstelle aber etwas erweitern und einen gut ausgeformten Radius bilden.

Bei der Formgebung können die oberen Schlaufen nicht unbegrenzt eng ausgebildet werden, weil ansonsten der Eingriff eines Formwerkzeuges nicht möglich ist. Bei der Vorrichtung nach der DE-B 1 015 673 wird daher das frisch ausgebildete Wellband, welches die zylindrischen Stangen als Formkörper in den unteren Schlaufen noch enthält, auf einer im wesentlichen ebenen Strecke zusammengeschoben, wobei sich die oberen Schlaufen verengen, die unteren aber durch die in ihnen befindlichen Stangen unverändert bleiben. In diesem zusammengeschobenen Zustand wird die Welle dann auf eine Trägerbahn aufgeleimt, so daß anschließend die Formkörper entnommen werden können, ohne daß sich die Welle noch verändert.

Beim Zusammenschieben der Wellen nach dem in der DE-B 1 015 673 dargestellten Verfahren werden gut ausgebildete obere Schlaufen, wie sie in Fig. 1 dargestellt sind, bestenfalls nur dann erhalten, wenn ein sehr langfaseriges, elastisches Material verwendet wird, welches in den Scheitelpunkten der oberen Schlaufen nicht zum Knicken oder Brechen neigt.

Für Verpackungsteile der hier betroffenen Art ist es jedoch wünschenswert, kostengünstige Fasermaterialien einzusetzen, die entweder einen hohen Anteil an Holzschliff oder auch Regeneratfasern aus Altpapier enthalten. Diese Produkte sind im allgemeinen weit weniger elastisch als Bahnen aus frischem, langfaserigem Zellstoff.

Ein solches, weniger elastisches Material neigt bei seiner Verarbeitung in einer Vorrichtung gemäß der DE-B 1 015 673 beim Zusammenschieben der Wellen dazu, im Bereich der oberen Schlaufen nicht die angestrebte kontinuierlich gekrümmte Form beizubehalten, sondern zu knicken oder zu brechen, so daß die Welle in ihrem oberen Bereich ihre Rundungen verliert und die Gestalt einer Reihe aneinandergefügter "U" einnimmt. Dieser Vorgang wird noch dadurch begünstigt, daß die oberen Schlaufen beim Zusammenschieben der Welle nach dem bekannten Verfahren nach oben hin frei ausweichen können, so daß beim Zusammenschieben ein Flachlegen der oberen Schlaufen unter Zunahme von deren Höhe und damit einhergehendem Knicken erfolgt.

Ergänzend wird noch auf eine weitere Maschine zur Herstellung von Wellpappe hingeweisen, siehe CH-A-367383. Hier treten ähnliche Probleme auf wie bei der oben diskuttierten Maschine gemäß.DE-B-1 015 673.

Der Erfindung liegt demgegenüber die Aufgabe zugrunde, ein Verfahren vorzustellen, mit welchem die Ausbildung der oberen Schlaufen der Welle im allgemeinen verbessert und auch die Verarbeitung von spröderen Materialien ermöglicht wird. Aufgabe der Erfindung ist gleichzeitig eine Vorrichtung, mit der sich das neue Verfahren effektiv und wirtschaftlich durchführen läßt.

Verfahrensmäßig wird diese Aufgabe erfindungsgemäß durch die kennzeichnenden Merkmale des Patentanspruches 1 gelöst. Eine entsprechende Vorrichtung weist grundsätzlich die kennzeichnenden Merkmale des Patentanspruches 11 auf.

Wesentlich für das neue Verfahren und die neue Vorrichtung sind, daß die Welle beim Zusammenschieben der oberen Schlaufen, was hier im wesentlichen einzeln geschieht, im Bereich der oberen Schlaufen von außen durch Anlage gegen eine Formfläche geführt ist, so daß die obere Schlaufe ihren ursprünglichen Krümmungszustand im Scheitelbereich im wesentlichen beibehalten kann bzw. muß und nur die Schenkel der oberen Schlaufen in ihrem mittleren Bereich in etwa halber Höhe zusammengeschoben werden. Diese Formfläche wird erfindungsgemäß praktisch dadurch erreicht, daß die Formkörper im wesentlichen den Innenquerschnitt der unteren Schlaufe aufweisen und an ihren zur oberen Schlaufe hin auslaufenden Basisflanken durch elastische Materialbereiche miteinander verbunden sind, die die Formflächen zur Anlage der oberen Wellenschlaufen bilden.

In Anlehnung an den Stand der Technik und unter Bezugnahme auf die besonders typische, z.B. in den Fig. 1-3 dargestellte Ausführungsform von Wellbandverpackungsteilen, wird nachstehend die bekannte Nomenklatur "obere" bzw. "untere Schlaufe" weiter verwendet. Es wird jedoch ausdrücklich darauf hingewiesen, daß die Formkörper nach der vorliegenden Erfindung ohne weiteres so ausgestaltet sein können, daß die Schlaufen die Form von Dreiecken oder Trapezen annehmen, oder daß durch Ausbilden geeigneter Formkörper ein nahezu rechtwinklig gefaltetes Wellbandverpackungsteil herstellbar ist. Gegebenenfalls muß bei geänderten Formkörpern das Formwerkzeug angepaßt und ebenfalls geändert werden, um ein weitgehendes Anlegen der Materialbahn an die Formkörper sicherzustellen.

Der Abstand zwischen zwei Formkörpern, der erforderlich ist, um mit einem geeigneten Formwerkzeug die Materialbahn für die Welle zwischen die Formkörper einzuführen bzw. einzudrücken, wird vorübergehend dadurch erzeugt, daß zwei benachbarte Formkörper mit ihren Scheitelbereichen auseinandergespreizt werden, was wiederum durch die elastische Verbindung der Formkörper an ihrer Basis möglich wird. Ist die Materialbahn einmal im gespreizten Zustand zweier benachbarter Formkörper durch das Formwerkzeug in den Abstandsraum eingedrückt und in Anlage mit den Formkörpern und der Formfläche gebracht, erfolgt das Verengen der oberen Schlaufen im wesentlichen einzeln dadurch, daß die gespreizten Formkörper wieder in ihre Normallage einander genähert werden, wobei die Materialbahn in Anlage mit den Flanken der Formkörper und der diese verbindenden elastischen Formfläche bleibt.

Praktisch bzw. vorrichtungsmäßig läßt sich dieser Vorgang dadurch realisieren, daß die Formkörper äquidistant auf einem endlos umlaufenden, flexiblen Trägergurt angebracht sind. Wird dieser Trägergurt um eine relativ scharfkantige Umlenkstelle geführt, spreizen sich jeweils zwei benachbarte Formkörper auseinander, indem der nachlaufende Formkörper noch senkrecht zur ersten Richtung und der vorlaufende Formkörper bereits senkrecht zur umgelenkten Richtung des flexiblen Gurtes steht. In diesem Moment der Aufspreizung drückt ein geeignetes Formwerkzeug die Materialbahn in den Abstandsbereich zwischen diesen beiden Formkörpern. Passiert auch der nachlaufende Formkörper die Umlenkstelle, gelangt er bezüglich seiner Symmetrieebene wieder in Parallelstellung zum vorlaufenden Formkörper, wodurch die obere Schlaufe des Materialbandes bereits verengt und in ihre endgültige Gestalt gebracht worden ist.

Da Formkörper bzw. Formkörpergurt und Formwerkzeug an der Umlenkstelle des Formkörpergurtes beim Einführen der Materialbahn eng anliegend ineinandergreifen, kann der Vorschub des Formkörpergurtes dadurch bewirkt werden, daß der Formkörpergurt mit einem geeigneten Antrieb verbunden ist und durch diesen transportiert wird. Gemäß einer bevorzugten Ausführungsform ist jedoch alternativ das Formwerkzeug angetrieben und zieht bzw. schiebt die Materialbahn in den Zwischenraum zwischen den aufgespreizten Formkörpern ein, so daß sie eng an deren Oberfläche angelegt wird. Bei dieser Ausführungsform wird der Formkörpergurt passiv vorgeschoben.

Es ist selbstverständlich auch denkbar, daß sowohl der Formkörpergurt als auch das Formwerkzeug angetrieben sind. Hierbei ist allerdings der präzisen Abstimmung der Vorschubgeschwindigkeiten zwischen Formkörpergurt und Formwerkzeug besondere Aufmerksamkeit zu schenken, um ein unerwünschtes Spannen der Materialbahn an der Umlenkstelle und damit eine gestörte Formgebung zu vermeiden.

Der Art der Umlenkung des Formkörpergurtes und dem Verhalten der die Formkörper verbindenden elastischen Formflächen sowie der Formkörper selbst an dieser Umlenkstelle muß besondere Beachtung geschenkt werden. Dabei ist zu vermeiden, daß sich die elastische Formfläche unmittelbar beim Passieren der Umlenkstelle zu stark konkav nach außen wölbt. Dies könnte zur Folge haben, daß die an die Formfläche angelegte Materialbahn beim wieder Zusammenführen der benachbarten Formkörper sich nicht konkav in die nunmehr in jedem Fall konkav ausgebildete Formfläche hineinlegt, sondern in eine konvexe Falte nach außen springt.

Von wesentlichem Einfluß ist in diesem Zusammenhang auch das Mittel, an dem die Umlenkung des Formkörpergurtes erfolgt. Erfindungsgemäß wird hier bevorzugt eine prismatische Mehrkantwalze, zweckmäßigerweise eine Dreikantwalze verwendet, deren Eckenabstände der Basisbreite eines Formkörpers entsprechen, und deren Ecken jeweils mit dem Formflächenbereich des Gurtes zwischen zwei Formkörpern in Eingriff gelangen. Die Formkörper selbst werden bei dieser Ausführung auf einer Fläche der Dreikantwalze aufliegend praktisch um die Ecke gehoben. Auch der Grad der Abrundung der Kanten dieser Umlenkwalze kann auf die Ausbildung der Formfläche im Umlenkbereich von Einfluß sein.

Gemäß einer weiteren Ausführungsform der Erfindung ist das Mittel zum Umlenken des Formkörpergurtes als zylindrische Walze ausgebildet, da sich gezeigt hat, daß die gewünschte Aufspreizung des Formkörpergurtes auch erreichbar ist, wenn dieser Gurt über eine einfache, zylindrische Walze geführt wird. Der Durchmesser der Walze ist dabei in Abstimmung mit der Größe und der Ausgestaltung der Formkörper zu wählen.

Um ein stetiges Übergangsverhalten zwischen den Flanken der Formkörper und dem sie verbindenden Formflächenmaterial zu erreichen, kann es zweckmäßig sein, die ansonsten aus einem relativ steifen elastischen Material bestehenden Formkörper mit einem lumenartigen Hohlraum zu versehen, so daß sich in ihrer Dicke reduzierte Flankenwände ergeben, die einen stetigen übergang zu der flexiblen Formfläche bilden.

Um eine gleichmäßig ausgeformte Wellbandverpackung zu erhalten, ist es vorteilhaft, nach dem Abrollen der Materialbahn diese vor dem Zuführen zu der erfindungsgemäßen Vorrichtung, d.h. insbesondere vor dem Einführen in den Formkörpergurt, an geeigneten Umlenkstellen der Materialbahn vorzubiegen bzw. vorzubrechen, so daß sich die Materialbahn ohne großen Kraftaufwand in vollständige Anlage an die Formkörper formen läßt. Das Vorbiegen bzw. Vorbrechen dient jedoch vor allem der Verbesserung der Geschmeidigkeit, eine Festigkeitsverminderung der Materialbahn ist keineswegs beabsichtigt und die Umlenkstellen der Materialbahn, beispielsweise Umlenkwalzen, -rollen oder -stangen sind so ausgebildet, daß dies sicher vermieden wird. Die Umlenkmittel an den Umlenkstellen der Materialbahn können angetrieben sein, es ist jedoch auch denkbar, daß die Materialbahn von einer Vorratsrolle gesteuert abgerollt wird, und daß das Vorbiegen beim gesteuerten Abrollen der Materialbahn erfolgt.

Das Anlegen der Materialbahn an die Formkörper erfolgt besonders einfach und gleichmäßig, wenn diese vor dem Zuführen zum Formwerkzeug frei durchhängt, so daß das Anlegen an die Formkörper nicht durch etwaige Zugspannungen in der Materialbahn beeinflußt wird. Dementsprechend sind die Antriebe, mit denen das Vorbiegen der Materialbahn gesteuert wird und die Antriebe an der erfindungsgemäßen Vorrichtung so ausgelegt, daß gemäß einer bevorzugten Ausführungsform die Materialbahn zwischen den Umlenkstellen der Materialbahn und der Zuführung zum Formkörpergurt und zum Formwerkzeug spannungsfrei durchhängt.

Die im Hinblick auf die Wellenbildung erfindungsgemäß ausgeführte Vorrichtung, basierend auf dem erfindungsgemäßen Verfahren, bringt weitere Vorteile für die übrigen Herstellungsschritte mit sich.

Während sich hinter der Umlenk-Formgebungsstelle die Welle bereits in ihrer endgültigen Gestalt in einem geraden Trum des Formkörpergurtes noch auf den Formkörpern befindet, kann die Welle in den Scheitelbereichen ihrer äußeren Schlaufen auf den Formkörpern problemlos für ein nachfolgendes Aufbringen der Trägerbahn beleimt werden. Bei herkömmlichen Verfahren wurde im allgemeinen die gesamte Trägerbahn beleimt, die jedoch nur in Teilabschnitten mit der Welle in Berührung gelangt, so daß ein unnötig hoher Leimverbrauch erfolgte. Bei Beschränkung der Beleimung auf die Scheitelbereiche der unteren Schlaufen werden erhebliche Mengen an Leim eingespart, wodurch ein teurerer, schneller abbindender Leim verwendet werden kann, der eine erhebliche Geschwindigkeitssteigerung des Herstellungsverfahrens erlaubt.

Um beim Wechsel der Materialbahn bzw. beim eventuellen Leerlauf der Vorrichtung ein unerwünschtes Beleimen der Formkörper an deren Scheitelbereichen zu vermeiden, weisen diese Scheitelbereiche der Formkörper in den Abschnitten, in denen Beleimungselemente mit der Materialbahn in Berührung gelangen, Ausnehmungen auf. Damit wird beim Leerlauf der Vorrichtung ein Verkleben bzw. Verleimen der Scheitelbereiche der Formkörper vermieden. Diese Ausnehmungen in den Formkörpern wirken sich nicht nachteilig auf die Formgebung der Materialbahn aus, weil die Beleimungseinrichtung in der Regel nur Teilabschnitte der Materialbahn beleimt. Da die Beleimungseinrichtungen keinen hohen Druck auf den Scheitelbereich der Welle ausüben, sind kaum Verformungen zu beobachten, die durch diese Ausnehmungen verursacht werden.

Auch kann das Ablängen bzw. Zerteilen des nunmehr fixierten Wellbandes in Wellbandverpackungsteile bestimmter Länge unter Umständen durchgeführt werden, während sich das Wellband noch auf dem geraden Trum des Formkörpergurtes befindet. So ist es möglich Messer vorzusehen, die von oben in Scheitelnuten der Formkörper eingreifen und dabei das Wellband abschneiden, wobei als Möglichkeit für das Eingreifen u.a. schräg zum Wellband mitlaufende Messer, sich drehende Messerwalzen, oder sich auf- und abwärts bewegende Messer in Frage kommen. In diesen Scheitelnuten können als Schneidwiderlager beispielsweise metallische Einlagen vorgesehen sein. Auch könnte es möglich sein, in den Formkörpern versenkte Messerschneiden vorzusehen, die durch äußere Führungsmittel an einer bestimmten Abtrennstelle der Vorrichtung angehoben werden, um das Wellband erforderlichenfalls unter Andruck durch eine Gegenwalze zu zerteilen.

Schließlich müssen die Formkörper aus dem Wellband bzw. den bereits abgeteilten Wellbandverpackungsteilen entfernt werden. Vorteilhaft wird dies an einer weiteren Umlenkstelle des Formkörpergurtes durchgeführt, an der das Wellband bzw. die Wellbandabschnitte gerade weitergeführt, die Formkörper aber aus den Wellen abgelenkt werden. Die fixierte Welle sollte hierfür genügend Elastizität aufweisen. Es ist aber auch denkbar, bei weiterer Bewegung auf einem geraden Trum des Formkörpergurtes die Wellbandabschnitte seitlich vom Formkörpergurt abzuziehen.

Eine erfindungsgemäß ausgebildete Vorrichtung läßt sich einfach an die Herstellung unterschiedlicher Wellengrößen bzw. Wellenformen anpassen, indem lediglich der flexible Formkörpergurt ausgetauscht wird, der ohnehin in seiner Außenkontur der herzustellenden Welle genau entsprechen muß. Unterschiedliche Längen von Wellbandverpackungsteilen lassen sich auf einfache Weise dadurch erzeugen, daß versenkbare Messer nur in bestimmte der Formkörper eingesetzt werden oder nur jeweils bestimmte Messer des Gurtes zum Abschneiden von außen aktiviert werden.

Dadurch, daß die Formkörper fest auf einem umlaufenden Gurt angebracht und nicht einzeln befördert werden müssen wie bei herkömmlichen Vorrichtungen, erlaubt die erfindungsgemäße Vorrichtung relativ hohe Produktionsgeschwindigkeiten.

Anhand von in der Zeichnung beschriebenen Ausführungsbeispielen wird die Erfindung näher beschrieben.

Es zeigen:
- Fig. 1: eine geschnittene Seitenansicht eines Wellbandverpackungsteils,
- Fig. 2: eine Aufsicht auf ein Wellbandverpackungsteil mit seitlich überstehenden Trägern,
- Fig. 3: eine perspektivische Darstellung einer möglichen Gesamtverpackung, gemäß der Ausführungsform aus Fig. 2,

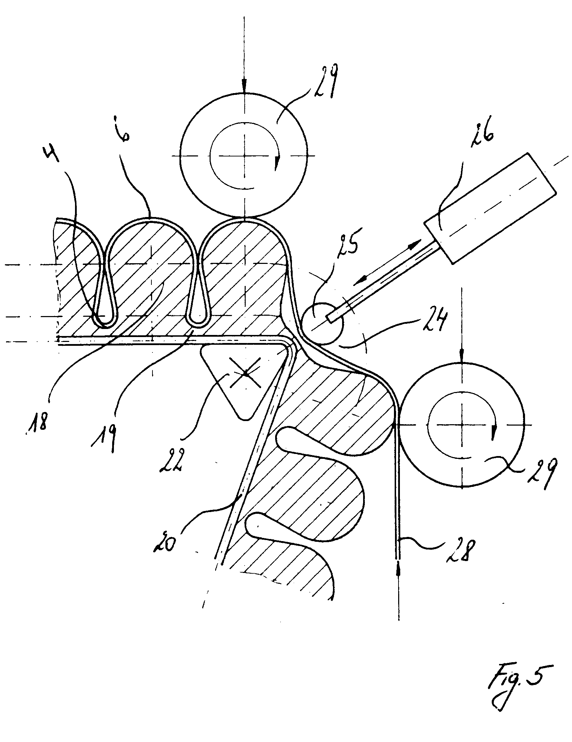

- Fig. 4: einen Längsschnitt durch die Vorrichtung zum Herstellen von Wellbandverpackungsteilen,

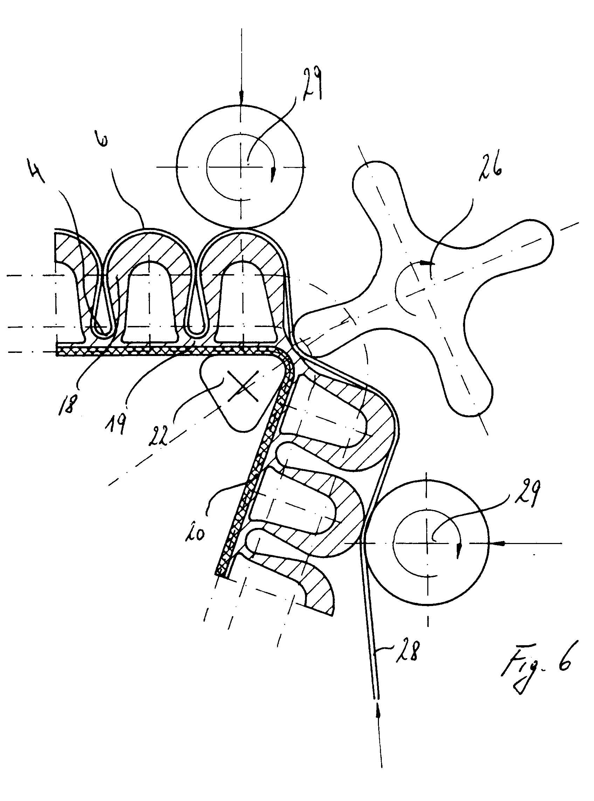

- Fig. 5-6: jeweils den gleichen Ausschnitt der Fig. 4, der die Formgebung des Wellbandes darstellt, allerdings mit verschiedenen Ausführungsformen, und

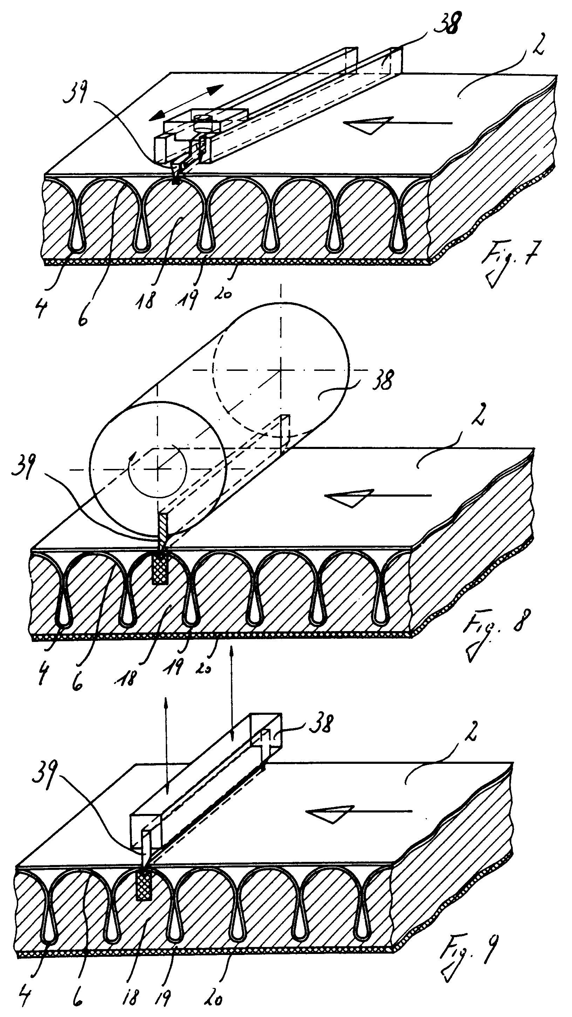

- Fig. 7-9: jeweils perspektivische Darstellungen von verschiedenen Ausführungsformen zum Zerteilen des Wellbandes in Wellbandverpackungsteile.

Fig. 4 stellt im Längsschnitt schematisch eine Vorrichtung gemäß der vorliegenden Erfindung zum Herstellen von Wellbandverpackungsteilen dar.

Die Vorrichtung weist eine Mehrzahl umlaufender, länglicher Formkörper 18 auf, die auf einem endlos umlaufenden Gurt 20 angeordnet sind, welcher über eine Walze 21 angetrieben wird. Dieser Gurt 20 wird über eine dreikantige Umlenkwalze 22 geführt, an der durch Umlenkung des Gurtes 20 jeweils zwei benachbarte Formkörper 18 vorübergehend zur Bildung eines vergrößerten Zwischenraumes gespreizt werden. Zum Eingriff in diesen jeweils vergrößerten Zwischenraum ist benachbart dieser Umlenkstelle 24 ein Formwerkzeugmittel 26 angeordnet. Durch dieses Eingreifen des Formwerkzeugmittels 26 wird die Materialbahn 28 in den Abstandsbereich zwischen aufeinanderfolgenden Formkörpern 18 eingedrückt und bildet dadurch ein Wellband 2 mit wechselweise oberen und unteren Schlaufen 4 bzw. 6. Die Materialbahn 28 wird von einem Zuführmittel zugeführt und unmittelbar vor und hinter der Umlenkstelle 24 durch jeweils eine Andruckeinrichtung 29 an die Scheitelbereiche der Formkörper angedrückt. Hinter der Umlenkstelle 24 weist die Vorrichtung in Arbeitsrichtung gesehen einen im wesentlichen geraden Trum 30 des endlosen Gurtes 20 auf, an dem die Formkörper 18 nach ihrer Spreizung wieder ihre äquidistante Normalstellung aufweisen und das Wellband 2 im wesentlichen in seiner endgültigen Gestalt an den Formkörpern 18 und den sie verbindenden Formflächen 19 anliegt. An diesem geraden Trum 30 sind eine Beleimungseinrichtung 32 zur äußeren Beleimung der Scheitelbereiche der die Formkörper umschlingenden unteren Schlaufen 6 des Wellbandes 2, eine Andruckeinrichtung 34 für die Trägerbahn 36 und eine Schneideinrichtung 38 angeordnet. Hinter dem geraden Trum 30 befindet sich eine zweite Umlenkstelle 40 für den Gurt 20, an der die Formkörper 18 durch die Gurtumlenkung aus dem im wesentlichen geradlinig weitergeführten, fertigen Wellband 2 entfernt werden.

In den Figuren 5 und 6 wird jeweils der Ausschnitt der Fig. 4 gezeigt, der die Formgebung des Wellbandes 2 darstellt. Abgebildet sind dabei lediglich unterschiedliche Ausführungsformen der Formkörper 18 und des Formwerkzeugmittels 26. Die Formkörper 18 selbst können aus einem steifen, elastischen Material gefertigt sein, wie in Fig. 5 dargestellt. Sie können aber auch in Längsrichtung verlaufende Hohlräume in Form eines Lumens aufweisen, wie Fig. 6 zeigt.

Die Formkörper 18 sind in ihrem Scheitelbereich im wesentlichen konvex zylindermantelflächig geformt, um die unteren Schlaufen 6 des Wellbandes 2 auszubilden. Zu ihrer Basis auf dem flexiblen Gurt 20 hin, verjüngen sie sich in ihrer Dicke. Die einander zugewandten seitlichen Flanken zweier benachbarter Formkörper 18 sind in der Nähe deren Basis durch einen Radiusübergang flexibel miteinander verbunden, zur Ausbildung einer konkaven Formfläche für die jeweils oberen Schlaufen 4 des Wellbandes 2. Die Basisbreite der Formkörper 18 entspricht dem Kantenabstand der Umlenkwalze 22. Dadurch gelangt die Umlenkwalze 22 mit ihren Kanten im Bereich zwischen zwei Formkörpern 18 mit dem Gurt 20 in Eingriff.

Auch das Formwerkzeugmittel 26 kann verschiedene Ausführungsformen aufweisen. Fig. 5 zeigt ein Formwerkzeugmittel 26, das eine längliche Halterung aufweist, an deren Spitze ein rundes Formteil 25 befestigt ist, welches hin und her bewegt werden kann. Das Formwerkzeugmittel 26 wird dabei so bewegt, daß es mit seinem runden Formteil 25 immer dann in die Umlenkstelle 24 eingreift, wenn gerade aufeinanderfolgende Formkörper 18 aufgespreizt sind. Dadurch wird die Materialbahn 28 an die Formkörper 18 gedrückt.

Fig. 6 zeigt ein Formwerkzeugmittel 26, welches die Form einer kreuzförmigen Walze aufweist, wobei die vier Schenkel der Walze jeweils annähernd die Form eines Zwischenraumes zwischen zwei Formkörpern 18 annehmen. Dreht sich die Walze gemeinsam mit dem endlos umlaufenden Gurt 20, so greift jeweils ein Schenkel der Walze in den aufgespreizten Zwischenraum von aufeinanderfolgenden Formkörpern 18 ein, bzw. ein Formkörper 18 in den Zwischenraum von aufeinanderfolgenden Walzenschenkeln, wodurch die Materialbahn 28 an die Formkörper 18 gedrückt wird.

Alternativ zu der in Fig. 6 dargestellten Walze kann gemäß einer bevorzugten Ausführungsform das Formwerkzeugmittel auch als achtschenklige Walze ausgebildet sein.

Die Figuren 7 bis 9 zeigen jeweils eine perspektivische Darstellung von verschiedenen Ausführungsformen zum Zerteilen des Wellbandes 2 in Wellbandverpackungsteile.

Fig. 7 stellt eine Schneideinrichtung 38 mit einem Messer 39 dar, deren Messer 39 von oben jeweils in den mit einer Nute versehenen Scheitelbereich eines Formkörpers 18 eingreift. Indem das Messer 39 mit dem umlaufenden Gurt 20 schräg mitläuft, trennt es das Wellband 2 quer zu dessen Bewegungsrichtung im Scheitelbereich einer unteren Schlaufe 6.

Fig. 8 zeigt eine Schneideinrichtung 38 in Form einer Messerwalze, die oberhalb der Trägerbahn 36 angeordnet ist, und sich mit dem umlaufenden Gurt 20 so dreht, daß das Messer 39 von oben jeweils in den mit einer Nute versehenen Scheitelbereich eines Formkörpers 18 eingreift, und dadurch das Wellband 2 zerteilt.

Fig. 9 zeigt eine Schneideinrichtung 38 mit einem Messer 39, welche sich derart auf und nieder bewegt, daß das Messer 39 von oben jeweils in den mit einer Nute versehenen Scheitelbereich eines Formkörpers 18 eingreift, und dadurch das Wellband 2 zerteilt.

Das Verfahren zur Herstellung von Wellbandverpackungsteilen ist leicht durchzuführen.

Eine kontinuierlich zugeführte Materialbahn 28 aus Karton, Pappe oder dergl. Werkstoff wird mit Formkörpern 18, die auf einem endlos umlaufenden Gurt 20 angeordnet sind, über Andruckvorrichtungen 29 in Verbindung gebracht. An der Umlenkstelle 24 wird die Materialbahn 28 nacheinander in die Zwischenräume zwischen zwei langgestreckten, parallel verlaufenden und voneinander beabstandeten Formkörpern 18 einer kontinuierlichen Folge solcher Formkörper 18 gedrückt. Dabei wird der endlos umlaufende, flexible Trägergurt 20, auf dem die Formkörper 18 äquidistant angebracht sind, um eine Dreikantwalze umgelenkt, dessen Eckenabstand der Breite der Basisfläche eines Formkörpers 18 entspricht und dessen Ecken jeweils zwischen zwei Formkörpern 18 mit dem flexiblen Gurt 20 in Eingriff gelangen. Dadurch spreizen sich jeweils zwei benachbarte Formkörper 18 auseinander, indem der nachfolgende Formkörper 18 noch senkrecht zur ersten Richtung und der vorlaufende Formkörper 18 bereits senkrecht zur umgelenkten Richtung des flexiblen Gurtes 20 steht. In diesem Moment wird die Materialbahn 28 mittels eines länglichen Formwerkzeugmittels 26 in Umschlingung mit den ihr zugewandten, im wesentlichen zylindermantelflächig ausgebildeten Seiten der Formkörper 18 gebracht zur Ausbildung der jeweils unteren Schlaufen 6. Durch Umlenken der Materialbahn 28 um das Formwerkzeugmittel 26 werden die oberen Schlaufen 4 gebildet. Passiert auch der nachlaufende Formkörper 18, nach Entfernen des Formwerkzeugmittels 26, die Umlenkstelle 24, gelangt er bezüglich seiner Symmetrieebene wieder in Parallelstellung zum vorlaufenden Formkörper 18, wodurch die oberen Schlaufen 4 des Materialbandes 28 unter Belassung der Formkörper 18 in den unteren Schlaufen 6 quer zur Richtung der Wellen zusammengeschoben, verengt und in ihre endgültige Gestalt gebracht werden. Während dieses Zusammenschiebens der oberen Schlaufen 4, was im wesentlichen einzeln geschieht, wird die Welle im Bereich der oberen Schlaufen 4 von außen durch Anlage gegen eine Formfläche geführt, so daß die oberen Schlaufen 4 ihren ursprünglichen Krümmungszustand im Scheitelbereich im wesentlichen beibehalten können bzw. müssen und nur die Schenkel der oberen Schlaufen 4 in ihrem mittleren Bereich in etwa halber Höhe zusammengeschoben werden. Diese Formfläche wird erfindungsgemäß praktisch dadurch erreicht, daß die Formkörper 18 im wesentlichen den Innenquerschnitt der unteren Schlaufen 6 aufweisen und an ihren zu den oberen Schlaufen 4 hin auslaufenden Basisflanken durch elastische Materialbereiche miteinander verbunden sind, die die Formfläche zur Anlage der oberen Wellenschlaufen 4 bilden.

Das zusammengeschobene Wellband 2 passiert danach eine Beleimungseinrichtung 32, wo auf die Außenseite der Scheitellinien der unteren Schlaufen 6 im wesentlichen linienartig Leim aufgetragen wird, während sich die Formkörper 18 noch im Wellband 2 befinden.

Danach wird mit Hilfe der Andruckeinrichtung 34 eine zugeführte Trägerbahn 36 auf die durch die Formkörper unterstützten Schlaufen aufgedrückt. Dadurch wird das zusammengeschobene Wellband 2 mit seinen unteren Schlaufen 6 auf der Trägerbahn 36 fixiert.

Anschließend wird das Wellband 2 durch eine Schneideinrichtung 38 in Wellbandverpackungsteile zerteilt. Das Zerteilen erfolgt entweder durch von oben in Scheitelnuten der Formkörper 18 eingreifende Messer 39, oder durch in den Formkörpern 18 angeordnete, versenkte Messer 39, die aus deren Scheitelbereich auftauchen. Das Zerteilen wird im Bereich der Scheitellinien der unteren Schlaufen 6 durchgeführt, während sich die Formkörper 18 noch im Wellband 2 befinden.

Abschließend werden die Formkörper 18 nacheinander aus dem fixierten Wellband 2 entfernt. Dies geschieht dadurch, daß der flexible Gurt 20 mit den Formkörpern 18 über eine zweite Umlenkstelle 40 geführt wird, während die fertigen Wellbandverpackungsteile im wesentlichen geradlinig weitergeführt werden.

## Patentansprüche

1. Verfahren zum Herstellen eines Wellbandes (2) für Verpackungszwecke, bei dem eine kontinuierlich zugeführte Materialbahn (28) aus Karton, Pappe oder dergl. Werkstoff mittels eines endlos umlaufenden Formbandes (20) oder dergl. aus elastischem Material, auf dem sich quer zur Umlaufrichtung erstreckende Formkörper (18) äquidistant angeordnet sind, und eines Formgebungswerkzeuges (26), das in die durch Umlenkung des Formbandes (20) vergrößerten Zwischenräume zwischen den Formkörpern (18) eingreift, in ein gewelltes Band mit unteren Schlaufen (6) entsprechend dem Querschnitt der Formköroer (18) sowie mit oberen, durch Verkleinerung der Zwischenräume zwischen den Formkörpern (18) in Umlaufrichtung nach der Umlenkung des Formbandes (20) gebildeten Schlaufen (4) umgeformt und danach mit einer kontinuierlich zugeführten Trägerbahn (36) längs der Scheitelbereiche der unteren Schlaufen (6) verbunden und schließlich das fertige Wellband (2) vom Formband (20) getrennt wird, dadurch gekennzeichnet, daß auf dem flexiblen Formband (20) Formkörper (18) aus flexiblem Material angeordnet sind, wobei Formband (20) und Formkörper (18) mit den dazwischenliegenden Formflächen (19) bei geradliniger Erstreckung des Formbandes (20) aufeinanderfolge identische Formquerschnitte bilden, die der Endform des gewellten Bandes identisch entsprechen, daß die oberen Schlaufen (4) durch Abwälzen des Formgebungswerkzeugs (26) auf der dabei am Formkörper (18) bzw. Formband (20) anliegenden Materialbahn (28) vorgeformt werden, wenn das Formband (20) umgelenkt wird, und daß die endgültige Formgebung der oberen Schlaufen (4) unter Anlage an einer der gesamten Außenseite der oberen Schlaufen (4) gegenüberliegenden Form erfolgt, die durch zwei benachbarte Formkörper (18) und den dazwischen liegenden an Formflächen (19) ausgebildeten Bereich des Formbandes (20) gebildet wird, wenn das Formband (20) nach dem Umlenken geradlinig weitergeführt wird.

2. Verfahren nach Anspruch 1, dadurch gekennzeichnet, daß die Formfläche aus den unteren, dem Formband (20) benachbarten Seitenflanken der Formkörper (18) und dem Grund des elastischen Verbindungsbereichs (19) zwischen zwei benachbarten Formkörpern (18) gebildet wird.

3. Verfahren nach Anspruch 2, dadurch gekennzeichnet, daß symmetrisch zu einer Mittelebene ausgebildete Formkörper (18) verwendet werden, wobei die Mittelebenen bei gerader Erstreckung des Formbandes (20) äquidistant und parallel zueinander verlaufen und beim Umlenken fächerförmig voneinander abgespreizt werden.

4. Verfahren nach Anspruch 3, dadurch gekennzeichnet, daß zur Anordnung der Formkörper (18) ein flexibler, endlos umlaufender Gurt (20) verwendet wird.

5. Verfahren nach Anspruch 4, dadurch gekennzeichnet, daß der flexible Gurt (20) an der Umlenkstelle über eine zylindrische Walze oder über eine rotierende Stange (22) mit Vieleckquerschnitt geführt wird, dessen Eckenabstand der Breite der Basisfläche eines Formkörpers (18) entspricht und dessen Ecken jeweils im Zwischenraum zwischen zwei Formkörpern (18) mit dem flexiblen Gurt (20) in Eingriff gelangen.

6. Verfahren nach einem der Ansprüche 4 und 5, dadurch gekennzeichnet, daß zum Entfernen der Formkörper (18) aus dem Wellband (2) der flexible Gurt (20) mit den Formkörpern (18) erneut über eine Umlenkstelle (21) geführt wird.

7. Verfahren nach mindestens einem der Ansprüche 2-6, dadurch gekennzeichnet, daß das Fixieren der Trägerbahn (26) an dem gewellten Band durch Verleimung erfolgt, wobei der Leim im wesentlichen linienartig im Bereich der Scheitellinien der unteren Schlaufen (6) auf deren Außenseite aufgetragen wird, während sich die Formkörper (18) noch in dem gewellten Band befinden und die Trägerbahn (26) auf die durch die Formkörper (18) unterstützten unteren Schlaufen (6) aufgedrückt wird.

8. Verfahren nach mindestens einem der Ansprüche 1-7, dadurch gekennzeichnet, daß das Wellband (2) in einzelne Wellbandverpackungsteile zerteilt wird und daß das Zerteilen im Bereich der Scheitellinien der unteren Schlaufen (6) erfolgt, wenn sich Formkörper (18) und Wellband (2) noch miteinander im Eingriff befinden.

9. Verfahren nach Anspruch 8, dadurch gekennzeichnet, daß das Zerteilen durch von oben in Scheitelnuten der Formkörper (18) eingreifende Messer geschieht.

10. Verfahren nach Anspruch 8, dadurch gekennzeichnet, daß das Zerteilen durch in den Formkörpern (18) angeordnete, versenkte Messer (38) erfolgt, die aus deren Scheitelbereichen auftauchen.

11. Vorrichtung zum Herstellen eines Wellbandes (2) für Verpackungszwecke mit
- Mitteln (29) zum Zuführen einer Materialbahn (28) aus Karton, Pappe oder dergl.
- einem endlos umlaufenden Formband (20) oder dergl. aus elastischem Material, auf dem sich quer zur Umlaufrichtung erstreckende Formkörper (18) äquidistant angeordnet sind,
- einem Formgebungswerkzeug (26), das in die durch Umlenken des Formbandes (20) vergrößerten Zwischenräume zwischen den Formkörpern (18) eingreift und die Materialbahn (28) in die Zwischenräume eindrückt, die sich in Umlaufrichtung nach der Umlenkung des Formbandes (20) verkleinern, zum Umformen der Materialbahn (28) in ein gewelltes Band mit alternierend aufeinanderfolgenden unteren und oberen Schlaufen (4, 6),
- Mitteln (34) zum Zuführen einer Trägerbahn (36) und zum Fixieren des gewellten Bandes mit seinen unteren Schlaufen (6) auf der Trägerbahn (36) sowie
- Mitteln zum Trennen des fertigen Wellbandes (2) vom Formband (20),
dadurch gekennzeichnet, daß auf dem flexiblen Formband (20) Formkörper (18) aus flexiblen Material angeordnet sind, wobei Formband (20) und Formkörper (18) bei geradliniger Erstreckung des Formbandes (20) aufeinanderfolgende identische Formquerschnitte bilden, die der Endform des gewellten Bandes identisch entsprechen, daß Formband (20) und Formgebungswerkzeug (26) derart zueinander angeordnet und angetrieben sind, daß sich das Formgebungswerkzeug (26) zur Verformung der oberen Schlaufen (4) auf der dabei am Formkörper (18) bzw. am Formband (20) anliegenden Materialbahn (28) abwälzen kann, wenn das Formband (20) umgelenkt wird, und daß zwei benachbarte Formkörper (18) und der dazwischen liegende an Formflächen (19) ausgebildete Bereich des Formbandes (20) eine Form bilden, an der die obere Schlaufe (4) zur endgültigen Formgebung mit ihrer gesamten Außenseite anliegen, wenn das Formband (20) im Anschluß an die Umlenkstelle geradlinig erstreckt ist.

12. Vorrichtung nach Anspruch 11, dadurch gekennzeichnet, daß die Formkörper (18) in ihrem oberen, vom Formband (20) abgewandten Teil im Querschnitt der vorgesehenen Innenkontur der unteren Schlaufen (6) entsprechen und daß bei nicht umgelenktem Formband die Zwischenräume zwischen benachbarten Formkörpern (18) die durch die unteren, dem Formband (20) zugewandten Teile sowie die Verbindungsbereiche zwischen den Formkörpern (18) begrenzt werden, der vorgesehenen Außenkontur der oberen Schlaufen (4) entsprechen.

13. Vorrichtung nach einem der Ansprüche 11 und 12, dadurch gekennzeichnet, daß die Formkörper (18) selbst aus einem steifen, elastischen Material gefertigt sind.

14. Vorrichtung nach Anspruch 13, dadurch gekennzeichnet, daß die Formkörper (18) in Längsrichtung verlaufende Hohlräume in Form eines Lumens aufweisen.

15. Vorrichtung nach einem der Ansprüche 11-14, dadurch gekennzeichnet, daß das Formband (20) an der dem Formgebungswerkzeug (26) gegenüberliegenden Umlenkstelle über eine zylindrische Walze oder über eine prismatische Mehrkantwalze (22) geführt ist, deren Kantenabstand der Basisbreite der Formkörper (18) entspricht und die jeweils mit ihren Kanten im Bereich zwischen zwei Formkörpern (18) mit dem Gurt (20) in Eingriff gelangt.

16. Vorrichtung nach mindestens einem der Ansprüche 11-15, dadurch gekennzeichnet, daß das Formband (20) in Umlaufrichtung hinter der Umlenkstelle im wesentlichen geradlinig geführt ist, daß die Mittelebene der Formkörper (18) in diesem Abschnitt der Umlaufbahn äquidistant und parallel zueinander verlaufen und daß die Formkörper (18) und deren Zwischenräume in diesem Abschnitt Anlageflächen für die endgültige Querschnittsform des gewellten Bandes abilden.

17. Vorrichtung nach Anspruch 16, dadurch gekennzeichnet, daß dem Formband (20) im geradlinigen Abschnitt der Umlaufbahn eine Beleimungseinrichtung (32) zur Beleimung der äußeren Scheitelbereiche der die Formkörper (18) umschließenden unteren Schlaufen (6) des gewellten Bandes sowie eine Andrückeinrichtung (34) für die Trägerbahn (36) zugeordnet ist.

18. Vorrichtung nach Anspruch 17, dadurch gekennzeichnet, daß die Formkörper (18) im Scheitelbereich Ausnehmungen aufweisen, so daß die Formkörper (18) mit der Beleimungseinrichtung (34) nicht in Berührung kommen, wenn vom Formband (20) kein gewelltes Band mitgeführt wird.

19. Vorrichtung nach mindestens einem der Ansprüche 11-18, dadurch gekennzeichnet, daß zumindest einige der Formkörper (18) mit Scheitelnuten versehen sind, in welche von oben zum Zerteilen des Wellbandes (2) Messer (21) eingreifen können.

20. Vorrichtung nach mindestens einem der Ansprüche 11-18, dadurch gekennzeichnet, daß zumindest einige der Formkörper (28) mit versenkbaren Messerschneiden (31) versehen sind, welche durch äußere Führungsmittel zum Zerteilen der Wellbahn (2) ausfahrbar sind.

21. Vorrichtung nach mindestens einem der Ansprüche 16-20, dadurch gekennzeichnet, daß im Anschluß an den Abschnitt mit geradliniger Formbandführung eine zweite Umlenkstelle (21) vorgesehen ist, an der das im wesentlichen geradlinig weitergeführte fertige Wellband (2) und das umgelenkte Formband (20) voneinander getrennt werden.

22. Vorrichtung nach mindestens einem der Ansprüche 11-21, dadurch gekennzeichnet, daß das Formgebungswerkzeug (26) aus einer im Querschnitt sternförmigen Walze mit mehreren radial vorstehenden, außen gerundeten Stegen besteht, deren Querschnitt auf die vorgesehen Form der oberen Schlaufen (4) abgestimmt ist.

## Claims

1. A process for the manufacture of a corrugated strip (2) for packaging purposes, in which a continuously fed material strip (28) of cardboard, pasteboard, or similar material, conveyed by means of an endlessly circulating shaping strip (20) or similar arrangement of elastic material, on which shaping bodies (18) are arranged equidistant from one another, extending transverse to the direction of circulation, and a shaping tool (26), which engage in the intermediate spaces between the shaping bodies (18), enlarged as a result of the deflection of the shaping strip (20), is reshaped into a corrugated strip with lower faces (6) corresponding to the cross-section of the shaping bodies (18) as well as with upper faces (4), formed by the reduction of the intermediate spaces between the shaping bodies (18) in the direction of circulation after the deflection of the shaping strip (20), and are thereafter connected to a continuously-fed carrier strip (36) along the length of the limb areas of the lower faces (6), and, finally, the finished corrugated strip (2) is separated from the shaping strip (20), characterised in that shaping bodies (18) made of flexible material are arranged on the flexible shaping strip (20), in which situation the shaping strip (20) and shaping bodies (18), with the shaping surfaces (19) located between them, with straight extension of the shaping strip (20) form identical shaping cross-sections following one after another, which correspond identically to the final shape of the corrugated strip, that the upper faces (4) are pre-shaped by the unwinding movement of the shaping tool (26) on the material strip (28) which is in contact with the shaping body (18) and shaping strip (20), and that the final shaping of the upper faces (4) takes place under contact with one of the full external surfaces of the upper faces (4) of the shape opposite, which is formed by two adjacent shaping bodies (18) and the area of the shaping strip (20) located between them, in the form of shaping surfaces, when the shaping strip (20) is guided onwards in a straight line after deflection.

2. A process according to Claim 1, characterised in that the shaping surface is formed from the lower side flanks of the shaping bodies (18), adjacent to the shaping strip (20), and from the base of the elastic connecting area (19) between two adjacent shaping bodies (18).

3. A process according to Claim 2, characterised in that shaping bodies (18) are used which are formed symmetrically to a mid-plane, in which situation the mid-planes run equidistant from and parallel to one another with the straight extension of the shaping strip (20), and are splayed apart from one another in fan fashion on deflection.

4. A process according to Claim 3, characterised in that a flexible endlessly circulating belt (20) is used for the arrangement of the shaping bodies (18).

5. A process according to Claim 4, characterised in that the flexible belt (20) is guided at the deflection point across a cylindrical roller or a rotating bar (22) with a multi-cornered cross-section, the distance between the corners of which corresponds to the width of the base surface of a shaped body (18), and the corners of which engage in each case wit the flexible belt (20) in the intermediate space between two shaping bodies (18).

6. A process according to one of Claims 4 and 5, characterised in that, in order to remove the shaping bodies (18) from the corrugated strip (2), the flexible belt (20) is again guided with the shaping bodies (18) around a deflection point (21).

7. A process according to at least one of Claims 2-6, characterised in that the fixing of the carrier strip (26) to the corrugated strip is effected by adhesive binding, in which situation the adhesive is applied in essentially linear fashion in the area of the face lines of the lower faces (6) on the outside, while the shaping bodies (18) are still located in the corrugated strip and the carrier strip (26) is pressed onto the lower faces (6), supported by the shaping bodies (18).

8. A process according to one of Claims 1-7, characterised in that the corrugated strip (2) is divided into individual corrugated strip packaging elements, and that the separation takes place in the area of the face lines of the lower faces (6), when the shaping bodies (18) and corrugated strip (2) are still engaged.

9. A process according to Claim 8, characterised in that the separation takes place by means of blades engaging from above into face slots in the shaping bodies (18).

10. A process according to Claim 8, characterised in that the separation is carried out by recessed blades (38) arranged in the shaping bodies (18), which emerge from the areas of the faces.

11. A device for the manufacture of a corrugated strip (2) for packaging purposes, with
- Media (29) for guiding a material strip (28) made of cardboard, pasteboard, or similar material;
- An endlessly circulating shaping strip (20) or similar item made of elastic material, on which shaping bodies (18), extending transversely to the direction of circulation are arranged equidistant to one another;
- A shaping tool (26), which engages in the intermediate spaces between the shaping bodies (18), enlarged by the deflection of the shaping strip (20), and the material strip (28) and presses the material strip (28) into the intermediate spaces, which are reduce in size in the direction of circulation after the defection of the shaping strip (20), for reshaping the material strip (28) into a corrugated strip with alternating sequential upper and lower faces (4, 6);
- Media (34) for feeding a carrier strip (36) and for fixing the corrugated strip with its lower faces (6) on the carrier strip (36), and;
- Media for separating the finished corrugated strip (2) from the shaping strip (20),
characterised in that shaping bodies (18) made of flexible material are arranged on the flexible shaping strip (20), in which situation the shaping strip (20) and shaping bodies (18), with the straight-line extension of the shaping strip (20), form identical shaping cross-sections following in sequence, which correspond identically to the final shape of the corrugated strip; that the shaping strip (20) and shaping tool (26) are arranged in relation to one another and driven in such a way that the shaping tool (26) can be rolled off in order to shape the upper faces (4) on the material strip (28), which in this situation is in contact with the shaping body (18) and the shaping strip (20), when the shaping strip (20) is deflected; and that two adjacent shaping bodies (18) and the area of the shaping strip (20) located between them, formed by the shaping surfaces (19), create a shape on which the upper face (4) is in contact for the final shaping with its entire outer surface, when the shaping strip (20) is extended in a straight line following the deflection point.

12. A device according to Claim 11, characterised in that the shaping bodies (18) correspond in their upper part, turned away from the shaping strip (20), to the cross-section of the planned inside contour of the lower faces (6); and that, if the shaping strip is not deflected, the intermediate spaces between adjacent shaping bodies (18), which are delimited by the lower parts, turned towards the shaping strip (20), and the connection sections between the shaping bodies (18), correspond to the external contour of the upper faces (4).

13. A device according to one of Claims 11 and 12, characterised in that the shaping bodies (18) are themselves manufactured from a rigid elastic material.

14. A device according to Claim 13, characterised in that the shaping bodies (18) feature cavities in the form of a lumen, running in the longitudinal direction.

15. A device according to one of Claims 11-14, characterised in that the shaping strip (20) at the deflection point located opposite the shaping tool (26) is guided across a cylindrical roller or a prismatic multi-edged roller (22), the edge interval of which corresponds to the base width of the shaping bodies (18), and which in each case engage with their edges in the area between two shaping bodies (18) with the belt (20).

16. A device according to at least one of Claims 11-15, characterised in that the shaping strip (20) is guided essentially in a straight line behind the deflection point; that the mid-plane of the shaping bodies (18) in this section of the circuit run equidistant from and parallel to one another; and that the shaping bodies (18) and their intermediate paces in this section form contact surfaces for the final cross-sectional shape of the corrugated strip.

17. A device according to Claim 16, characterised in that a coating device (32) is arranged on the shaping strip (30) in the straight section of the circuit, for applying adhesive to the outer face areas of the lower faces (6) of the corrugated strip, surrounding the shaping bodies (18), as well as a pressure device (34) for the carrier strip (36).

18. A device according to Claim 17, characterised in that the shaping bodies (18) feature cut-outs in the face area, with the result that the shaping bodies (18) do not come in contact with the coating device (34) when no corrugated strip is carried along with the shaping strip (20).

19. A device according to at least one of Claims 11-18, characterised in that at least some of the shaping bodies (18) are provided with face slots, into which blades (21) can engage from above, in order to divide up the corrugated strip.

20. A device according to at least one of Claims 11-18, characterised in that at least some of the shaping bodies (28) are provided with lowerable cutting blades (31), which can be drawn out by external guidance media for cutting the corrugated strip (20.

21. A device according to at least one of Claims 16-20, characterised in that a second deflection point (21) is provided for, following the section with straight shaping strip guidance, at which the finished corrugated strip, which is being conducted onwards in an essentially straight line, and the deflected shaping strip (20) are separated from one another.

22. A device according to at least one of Claims 11-21, characterised in that the shaping tool (26) consists of a roller which is star-shaped in cross-section, with several radially projecting webs, rounded on the outside, the cross-sections of which are matched to the planned shape of the upper faces (4).

## Revendications

1. Procédé pour la fabrication d'une bande ondulée (2) à des fins de conditionnement, dans lequel une feuille de matière (28) acheminée en continu, constituée d'un matériau en carton, en carton-pâte ou analogues, au moyen d'une courroie de façonnement (20) de type périphérique sans fin ou analogues, en une matière élastique, sur laquelle sont disposés, en position équidistante, des corps moulés (18) s'étendant transversalement à la direction de défilement et au moyen d'un outil de formage (26) qui vient s'engrener dans les espaces intermédiaires ménagés entre les corps moulés (18), agrandis par le changement de direction de la courroie de façonnement (20), est transformée en une bande ondulée comprenant des boucles inférieures (6) dont la section transversale correspond à celle des corps moulés (18) et des boucles supérieures (4) formées par le rétrécissement des espaces intermédiaires ménagés entre les corps moulés (18) dans le sens de défilement après le changement de direction de la courroie de façonnement (20) et est ensuite reliée à une bande de support (36) acheminée en continu, le long des zones des sommets des boucles inférieures (6), la bande ondulée terminée (2) étant finalement séparée de la courroie de façonnement (20), caractérisé en ce que des corps moulés (18) en une matière flexible sont disposés sur la courroie de façonnement flexible (20), la courroie de façonnement (20) et les corps moulés (18) avec les surfaces de formage (19) disposées entre eux formant des sections transversales de façonnement identiques successives au cours de l'étirage rectiligne de la courroie de façonnement (20), qui correspondent de manière identique à la forme définitive de la bande ondulée, en ce que les boucles supérieures (4) sont soumises à un préformage par roulement de l'outil de formage (26) sur la feuille de matière (28) appliquée en l'occurrence sur le corps moulé (18), respectivement sur la courroie de façonnement (20), lorsque la courroie de façonnement (20) est soumise à un changement de direction, et en ce que le formage définitif des boucles supérieures (4) a lieu par application sur un moule opposé au côté externe total des boucles supérieures (4), qui est formé par deux corps moulés voisins (18) et par la zone de la courroie de façonnement (20) réalisée en forme de surfaces de formage (19) disposées entre eux, lorsque la courroie de façonnement (20) poursuit son chemin de manière rectiligne après le changement de direction.

2. Procédé selon la revendication 1, caractérisé en ce que la surface de façonnement est formée à partir des flancs latéraux inférieurs des corps moulés (18) voisins de la courroie de façonnement (20) et de la base de la zone de liaison élastique (19) entre deux corps moulés voisins (18).

3. Procédé selon la revendication 2, caractérisé en ce qu'on utilise des corps moulés (18) réalisés de manière symétrique par rapport à un plan médian, les plans médians s'étendant de manière équidistante et parallèlement l'un à l'autre lors de l'étirage rectiligne de la courroie de façonnement (20), et s'écartant l'un de l'autre pour former un compartiment lors du changement de direction.

4. Procédé selon la revendication 3, caractérisé en ce qu'on utilise, pour l'agencement des corps moulés (18), une courroie périphérique flexible sans fin (20).

5. Procédé selon la revendication 4, caractérisé en ce que la courroie flexible (20) est guidée à l'endroit de changement de direction par-dessus un rouleau cylindrique ou par-dessus une barre rotative (22) à section transversale polygonale, dont l'écartement entre les coins correspond à la largeur de la surface de base d'un corps moulé (18) et dont les coins viennent s'engrener avec la courroie flexible (20) respectivement dans l'espace intermédiaire ménagé entre deux corps moulés (18).

6. Procédé selon l'une quelconque des revendications 4 et 5, caractérisé en ce que, pour écarter les corps moulés (18) de la bande ondulée (2), on guide la courroie flexible (20) avec les corps moulés (18) une nouvelle fois par-dessus un endroit de changement de direction (21).

7. Procédé selon l'une quelconque des revendications 2 à 6, caractérisé en ce que la fixation de la bande de support (36) a lieu par collage sur la bande ondulée, la colle étant appliquée essentiellement sous forme linéaire dans la zone des lignes de sommets des boucles inférieures (6) sur leur côté externe, tandis que les corps moulés (18) se trouvent encore dans la bande ondulée, la bande de support (36) étant pressée sur les boucles inférieures (6) soutenues par les corps moulés (18).

8. Procédé selon l'une quelconque des revendications 1 à 7, caractérisé en ce que la bande ondulée (2) est subdivisée en éléments individuels de conditionnement sous forme de bande ondulée et en ce que la subdivision a lieu dans la zone des lignes de sommets des boucles inférieures (6) lorsque les corps moulés (18) et la bande ondulée (2) se trouvent encore en engrènement mutuel.

9. Procédé selon la revendication 8, caractérisé en ce que la subdivision a lieu via une lame venant s'insérer par le haut dans les rainures de sommet des corps moulés (18).

10. Procédé selon la revendication 8, caractérisé en ce que la subdivision a lieu via des lames (38) escamotées, disposées dans les corps moulés (18), qui font saillie à partir de leur zone de sommet.

11. Dispositif pour la fabrication d'une feuille ondulée (2) à des fins de conditionnement, comprenant
- des moyens (29) pour acheminer une feuille de matière (28) en carton, en carton-pâte ou analogues,
- une courroie de façonnement (20) périphérique sans fin ou analogues en une matière élastique sur laquelle sont disposés, de manière équidistante, des corps moulés (18) s'étendant transversalement à la direction de défilement,
- un outil de formage (26) qui vient s'engrener dans les espaces intermédiaires ménagés entre les corps moulés (18), agrandis par le changement de direction de la courroie de façonnement (20), et enfonce la feuille de matière (28) dans les espaces intermédiaires qui se rétrécissent dans la direction de défilement après le changement de direction de la courroie de façonnement (20) pour transformer la feuille de matière (28) en une bande ondulée comportant des boucles inférieures et supérieures successives (4, 6) disposées en alternance,
- des moyens (34) pour acheminer une bande de support (36) et pour fixer la bande ondulée avec ses boucles inférieures (6) à la bande de support (36), ainsi que
- des moyens pour séparer la bande ondulée finie (2) de la courroie de façonnement (20),
caractérisé en ce que, sur la courroie de façonnement flexible (20), sont disposés des corps moulés (18) en une matière flexible, la courroie de façonnement (20) et les corps moulés (18) formant des sections transversales de façonnement identiques successives lors de l'étirage rectiligne de la courroie de façonnement (20), qui correspondent de manière identique à la forme définitive de la bande ondulée, en ce que la courroie de façonnement (20) et l'outil de formage (26) sont disposés et entraînés l'un par rapport à l'autre de telle sorte que l'outil de formage (26), pour le façonnement des boucles supérieures (4), est à même de rouler sur la feuille de matière (28) s'appuyant en l'occurrence sur le corps moulé (18), respectivement sur la courroie de façonnement (20), lorsque la courroie de façonnement (20) est soumise à un changement de direction, et en ce que deux corps moulés voisins (18) et la zone de la courroie de façonnement (20) disposée entre eux, réalisée sous forme de surfaces de façonnement (19), forment un moule contre lequel viennent s'appuyer les boucles supérieures (4) avec leur côté externe total pour le formage définitif lorsque la courroie de façonnement (20) s'étend en ligne droite après son passage par l'endroit du changement de direction.

12. Dispositif selon la revendication 11, caractérisé en ce que les corps moulés (18) correspondent, dans leur partie supérieure se détournant de la courroie de façonnement (20), quant à leur section transversale, au contour interne prévu des boucles inférieures (6) et en ce que, tant que la courroie de façonnement n'a pas été soumise à un changement de direction, les espaces intermédiaires ménagés entre des corps moulés voisins (18), qui sont délimités par les parties inférieures orientées vers la courroie de façonnement (20) et par les zones de liaison entre les corps moulés (18), correspondent au contour externe prévu des boucles supérieures (4).

13. Dispositif selon l'une quelconque des revendications 11 et 12, caractérisé en ce que les corps moulés (18) sont réalisés eux-mêmes en une matière élastique rigide.

14. Dispositif selon la revendication 13, caractérisé en ce que les corps moulés (18) présentent des corps creux s'étendant en direction longitudinale, sous forme d'une lumière.

15. Dispositif selon l'une quelconque des revendications 11 à 14, caractérisé en ce que la courroie de façonnement (20) est guidée, à l'endroit de changement de direction opposé à l'outil de formage (26), par-dessus un rouleau cylindrique ou par-dessus un rouleau polygonal prismatique (22) dont l'écartement entre les arêtes correspond à la largeur de base des corps moulés (18) et qui vient s'engrener avec la courroie (20), respectivement avec ses arêtes dans la zone ménagée entre deux corps moulés (18).

16. Dispositif selon au moins une des revendications 11 à 15, caractérisé en ce que la courroie de façonnement (20) est guidée dans la direction de défilement en aval de l'endroit de changement de direction essentiellement de manière rectiligne, en ce que les plans médians des corps moulés (18) dans cette section de la bande périphérique s'étendent de manière équidistante et parallèlement l'un à l'autre, et en ce que les corps moulés (18) et leurs espaces intermédiaires forment, dans cette section, des surfaces d'appui pour la forme définitive en section transversale de la bande ondulée.

17. Dispositif selon la revendication 16, caractérisé en ce qu'un mécanisme de collage (32) est attribué à la courroie de façonnement (20) dans la section rectiligne de la bande périphérique, pour le collage des zones de sommet externes des boucles inférieures (6) de la bande ondulée, entourant les corps moulés (18), ainsi qu'un mécanisme de pression (34) pour la bande de support (36).

18. Dispositif selon la revendication 17, caractérisé en ce que les corps moulés (18) présentent, dans la zone de leur sommet, des évidements, si bien que les corps moulés (18) ne viennent pas se mettre en contact avec le mécanisme de collage (34) lorsqu'aucune bande ondulée n'est entraînée par la courroie de façonnement (20).

19. Dispositif selon au moins une des revendications 11 à 18, caractérisé en ce qu'au moins un certain nombre des corps moulés (18) sont munis de rainures de sommet dans lesquelles des lames (21) peuvent venir s'insérer par le haut pour subdiviser la bande ondulée (2).

20. Dispositif selon au moins une des revendications 11 à 18, caractérisé en ce qu'au moins un certain nombre des corps moulés (28) sont munis d'arêtes de couteaux escamotables (31) qui sont à même de sortir sous l'influence de moyens de guidage externes pour subdiviser la bande ondulée (2).

21. Dispositif selon au moins une des revendications 16 à 20, caractérisé en ce qu'on prévoit un second endroit de changement de direction (21) faisant directement suite à la section à guidage de courroie de façonnement rectiligne, endroit auquel on sépare l'une de l'autre la bande ondulée finie (2) soumise à un guidage ultérieur essentiellement rectiligne et la courroie de façonnement (20) ayant effectué un changement de direction.

22. Dispositif selon au moins une des revendications 11 à 21, caractérisé en ce que l'outil de formage (26) est constitué par un rouleau dont la section transversale est réalisée en forme d'étoile, possédant plusieurs nervures présentant un arrondi externe et faisant saillie en direction radiale, dont la section transversale coïncide avec la forme prévue des boucles supérieures (4).
